# EUROPÄISCHE PATENTANMELDUNG

(11) **EP 1 164 073 A1**
(43) Veröffentlichungstag der Anmeldung: **19.12.2001**
(21) Anmeldenummer: 01810438.0
(22) Anmeldetag: 03.05.2001
(51) Int. Cl.: B62D 33/06, B60R 21/13

(54) **Sicherheitskabine von Nutzfahrzeugen zum Lasten- und Personentransport**

(30) Priorität: 23.05.2000 CH 10282000
(71) Anmelder: Alcan Technology & Management AG, 8212 Neuhausen am Rheinfall (CH)
(72) Erfinder: Röllin, Ulrich, 8902 Urdorf (CH); Streiff, Samuel, 5210 Windisch (CH)

(57) **Zusammenfassung**

Sicherheitskabine von Nutzfahrzeugen zum Lasten- und Personentransport, die aus verschiedenen Rahmenteilen und Verkleidungsteilen aufgebaut ist. Die Rahmenteile bilden eine Käfigstruktur aus, enthaltend wenigstens einen rückwärtigen Rahmenteil (2), der quer zur Fahrtrichtung angeordnet und U- oder ringförmig ist, und wenigstens einem frontwärtigen Rahmenteil (4), der längs zur Fahrtrichtung angeordnet und bogen-, U- oder ringförmig ist. Der rückwärtige Rahmenteil (2) und der frontwärtige Rahmenteil (4) sind gegenseitig aneinander festgelegt. Ein Verformungsteil (1) zwischen, resp. vor, den frontwärtigen Rahmenteilen (4) vermag im Falle einer Kollision die Aufprallenergie aufzunehmen. Die Sicherheitskabine schützt die Insassen vor Intrusionen, sowohl von hinten von der Ladung stammend, als auch von vorne, verursacht durch eine Frontalkollision und auch durch ein Einknicken der Kabinenwände während eines Überschlages.

## Beschreibung

Vorliegende Erfindung betrifft eine Sicherheitskabine von Nutzfahrzeugen zum Lasten- und Personentransport, enthaltend Rahmenteile.

Nutzfahrzeuge, wie Lastkraftwagen, Schlepper und dergl., oder Nutzfahrzeuge für Personentransport, wie Omnibusse und Reisebusse oder Fahrzeuge mit sog. Doppelkabine, müssen die Sicherheit für die Insassen bei Unfällen gewährleisten. Die Führerkabine eines Nutzfahrzeuges ist durch ihre Lage den meisten Gefahren ausgesetzt. Bei einer Frontalkollision wirken die zerstörerischen Kräfte von vorne und es ist nicht auszuschliessen, dass die Ladung oder Teile davon in Bewegung geraten und unkontrolliert nach vorne gegen die Rückwand der Führerkabine prallen. Bei einem Aufprall von hinten ist nicht auszuschliessen, dass nicht nur die Ladung, sondern auch Aufbauten oder Teile davon von hinten gegen die Führerkabine gepresst werden. Bei Überschlägen muss die Führerkabine ebenfalls die Form bewahren, um den Überlebensraum nicht einzuschränken und Fahrer und Beifahrer nicht einzuquetschen. Deshalb ist es vorteilhaft, dass in der Struktur der Führerkabine Vorkehrungen getroffen, welche die Folgen von Unfällen mindern. Durch gezielte Massnahmen können Führerkabinen zu Sicherheitskabinen gestaltet werden. Mit Sicherheitskabinen werden in vorliegendem Fall Führerkabinen, resp. Teile davon, verstanden, die, über einem blossen Schutz gegen Wind und Wetter und der designmässigen Formgestaltung hinaus, Verstärkungen enthält, welche bei Aufprall- oder Überschlagsunfällen ihre ursprüngliche Form weitgehend beibehalten und die Abmessungen des Innenraums der Führerkabine vollständig oder zumindest in hohem Masse beibehalten.

Der Erfinder hat sich zum Ziel gesetzt, eine solche Sicherheitskabine aus wenigen einfach zu fertigenden Bauteilen zu schaffen.

Erfindungsgemäss wird das mit Ziel mit der in Anspruch 1 beschriebenen Ausführungsform erreicht. Die Ansprüche 2 bis 15 geben bevorzugte Detaillösungen an.

Die Figuren 1 bis 5 erläutern vorliegende Erfindung an Ausführungsbeispielen näher.

Figuren 1, 2 und 6 zeigen beispielhaft schematisch verschiedene Ausführungsformen von Sicherheitskabinen.

Die Figuren 3, 4 und 5 zeigen verschiedene Beispiele von Ausführungsformen der frontwärtigen Bauteile im Schnitt.

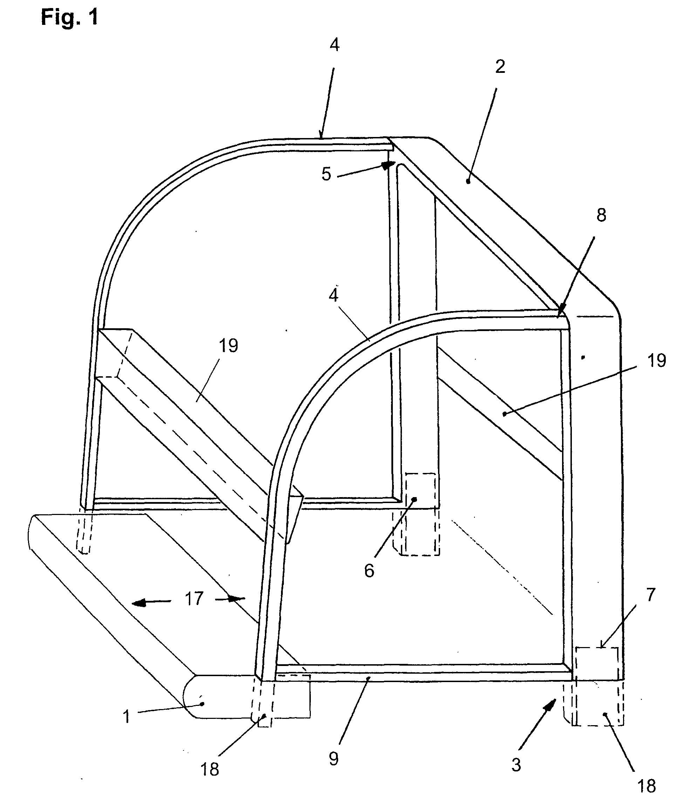

Die Figur 1 zeigt schematisch eine Sicherheitskabine mit dem rückwärtigen Rahmenteil (2). Der rückwärtige Rahmenteil (2) ist in vorliegendem Beispiel U-förmig gestaltet, wobei die offene Seite gegen unten, d.h. die Strasse, weist. Die Seiten begrenzend, sind zwei frontwärtige Rahmenteile (4) angeordnet. Die frontwärtigen Rahmenteile (4) sind an den oberen Anschlussstellen (5), resp. (8), und an den unteren Anschlussstellen (3), resp. (6), über die Längsverstrebungen (9) mit dem rückwärtigen Rahmenteil (2) verbunden. Queraussteifungen (19) erhöhen die Stabilität der Sicherheitskabine. Die Queraussteifungen (19) zwischen den frontwärtigen Rahmenteilen (4) kann gleichzeitig Träger für Armaturen, Lenkstock, Airbags und Aggregate sein. Zwischen oder auch vor den frontwärtigen Rahmenteilen (4) kann ein Verformungselement (1) eingesetzt werden. Das Verformungselement (1) hat die Wirkung einer sog. Crash-Box. Bei einem Aufprall wird das Verformungselement (1) unter grosser Energieaufnahme gestaucht. Der Pfeil (17) deutet an, dass beim Bau der Sicherheitskabine das Verformungselement (1) einfach eingeschoben werden und zu einem Austausch, z.B. nach einer Deformation, entsprechend nach vorne heraus genommen werden kann. Dadurch kann die Front-Aufprallpartie der Sicherheitskabine sehr stabil ausgebildet werden. Ohne das Verformungselement (1) steht einem Unfallgegner, z.B. ein Personenkraftwagen, nur der Verformungsweg der eigenen Struktur zur Verfügung. Das Verformungselement (1) jedoch steht der Sicherheitskabine vor und stellt dem Unfallgegner weiteren Verformungsweg zur Verfügung. Erst danach werden die Aufprallkräfte in die wesentlich geringer stauchempfindliche Sicherheitskabine eingeleitet.

Die frontwärtigen Rahmenteile (4) können U-förmig ausgestaltet sein, wobei es sich um einen im Detail nicht gezeigten einteiligen Rahmenteil handeln kann, dessen Öffnung nach hinten gerichtet ist und die Arme sich im unteren und oberen Bereich, bevorzugt in den Eckbereichen, über Anschlussstellen, am rückwärtigen Rahmenteil (2) abstützen. Die frontwärtigen Rahmenteile (4) können bogenförmig ausgestaltet sein, wobei es sich um einen z.B. zweiteiligen Rahmenteil handeln kann, aus im wesentlichen einem bogenförmigen oberen Teil und einer im wesentlichen gerade und horizontal verlaufenden Längsverstrebung (9). Es kann auch ein rückwärtiger Rahmenteil (2) mit direkt angeformten horizontal verlaufenden Längsverstrebungen angewendet werden, -- d.h. der rückwärtige Rahmenteil mit den horizontal verlaufenden Längsverstrebungen ist einstückig ausgeführt -- wobei sich die bogenfömigen frontwärtigen Rahmenteile (4) an ihrem unteren Ende am vorderen Ende der jeweiligen Längsverstrebung abstützen, resp. dort festgelegt sind, und die oberen hinteren Enden der bogenfömigen frontwärtigen Rahmenteile (4) in den oberen Eckbereichen des rückwärtigen Rahmenteil festgelegt sind.

Alternative Ausführungsformen, die nicht abgebildet sind, können einen quer stehenden rückwärtigen Rahmenteil und zwei längs ausgerichtete frontwärtigen Rahmenteile enthalten, wobei die frontwärtigen Rahmenteile ringförmig sind. Die jeweils hintere Schmalseite der ringförmigen frontwärtigen Rahmenteile stösst über einen Teil oder über die ganze Höhe gegen die nach vorne gerichteten senkrecht stehenden Schmalseiten des rückwärtigen Rahmenteils.

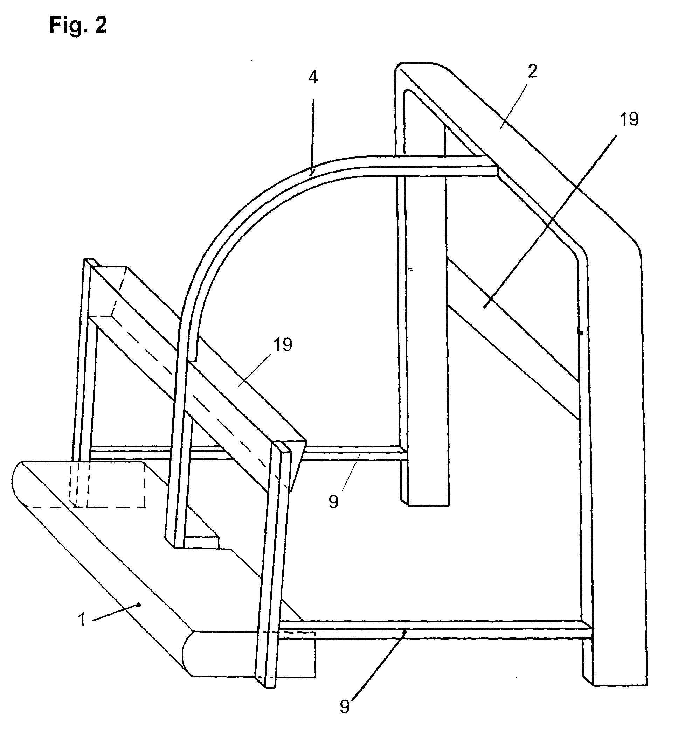

Die Figur 2 zeigt eine leicht geänderte Ausführungsform. Anstelle zweier frontwärtiger Rahmenteile (4) ist nur ein zentraler frontwärtiger Rahmenteil (4) vorgesehen. Es ist auch entsprechend möglich, mehr als zwei frontwärtige Rahmenteile, gleichmässig oder asymetrisch über die Breite des rückwärtigen Rahmenteils verteilt, anzubringen. Gemäss vorliegender Abbildung stützt sich der bogenförmig ausgeführte frontwärtige Rahmenteil (4) an dessen vorderen Ende z.B. auf die in mittiger Höhe angeordneten vorderen Querverstrebung (19) und an dessen unterem Ende direkt auf den nicht abgebildeten Fahrzeugrahmen. Es ist auch möglich, dass sich einer oder mehrere bogenförmig ausgeführte frontwärtige Rahmenteile (4) an deren unteren Ende nur auf den Fahrzeugrahmen oder eine unten liegende Querverstrebung stützen oder sich nur auf einer in mittiger Höhe angeordneten Querverstrebung (19) stützen.

Der rückwärtige Rahmenteil (2) kann entweder U-förmig oder auch geschlossen, d.h. ringförmig sein. Der rückwärtige Rahmenteil (2) und frontwärtige Rahmenteile (4) können z.B. aus Metall oder Kunststoffen, auch faserverstärkten Kunststoffen, oder einer Kombinationen davon, gefertigt sein. Metalle sind beispielsweise Eisenmetalle, wie Eisen und Stahl oder Leichtmetalle, wie Aluminium und Magnesium und deren Legierungen. Kunststoffe sind beispielsweise Polyamide, Polycarbonate, Polyolefine, Polyvinylchlorid, Acrylharze, Polyacrylnitrile, Acrylnitrile, copolymerisert mit Styrol-und/oder Butadienharzen, Epoxidharze usw. Die Kunststoffe können auch mit Kohle-, Glas-, Aramid und anderen Fasern verstärkt sein und/oder können Füllstoffe und Pigmente enthalten.

Sind der rückwärtige Rahmenteil (2) und/oder die frontwärtigen Rahmenteile (4) aus Metall, so können diese Gussstücke oder Strangpressteile sein, wie ein Profil, ein Vollprofil oder ein Ein- oder Mehrkammerhohlprofil. Es ist auch möglich, Hohlkörper aus Blechen gleicher oder gestufter Dicke ("tailored blanks") z.B. durch Schweissen, Kleben, Clichen usw. zu fertigen. Solche Hohlkörper oder auch Hohlprofile können zusätzlich durch Innenhochdrukkumformen in ihre Anwendungsform gebracht werden. Sind der rückwärtige Rahmenteil (2) und/oder die frontwärtigen Rahmenteile (4) aus faserverstärktem Kunststoff, so können diese in einem Wickelverfahren, Handlaminierverfahren, Harz-Fliessform-Vefahren, in Prepeg-Verarbeitung oder in einem Pressverfahren, z.B. verpressen von vorgetränkten Faserhalbzeug, hergestellt sein. Die Fasern liegen dazu bevorzugt als textile Flächengebilde vor. Der rückwärtige Rahmenteil (2) und/oder die frontwärtigen Rahmenteile (4) aus faserverstärkten Kunststoffen können als Voll- oder Hohlprofile einteilig gefertigt sein. Hohlräume können gegebenenfalls teilweise oder ganz mit einem Kunststoff, wie PUR, ausgeschäumt sein, um die strukturelle Festigkeit zu steuern, insbesondere zu erhöhen.

Der rückwärtige Rahmenteil (2) kann durchgehend den gleichen Basisquerschnitt aufweisen oder kann örtlich Querschnittsveränderungen aufweisen. Querschnittsveränderungen können durch gestufte Bleche, durch spanende Bearbeitung oder durch Auftragen erreicht werden. Partielle Verstärkungen können z.B. aufgeklebt, aufgeschraubt, aufgenietet usw. werden. Die Rahmenteile (2,4) können auch eine Kombination von Metallen und Kunststoffen sein. Dazu gehören auch mit Kunststoff umschichtete Metallprofile oder Metallprofile, wie Hohlprofile, deren Hohlräume ganz oder teilweise mit Kunststoffen, z.B. geschäumten Kunststoffen gefüllt, d.h. die ausgeschäumt sind. Ausgeschäumte Hohlprofile können auch Kunststoffprofile sein, deren Hohlräume ausgeschäumt sind, resp. können Integralschaumprofile sein.

Der rückwärtige Rahmenteil (2) und frontwärtige Rahmenteile (4) können an den gegenseitigen Anschlussstellen, wie auch an anderen Anschlussstellen, z.B. den Anschlussstellen zu einem Fahrzeugrahmen, Hilfsrahmen oder -träger oder Chassis, verstärkt sein. Solche Verstärkungen können z.B. Aussteifungen (7) sein, die sowohl integriert, als auch montiert sein können.

Der rückwärtige Rahmenteil (2) und frontwärtige Rahmenteile (4) können gegenseitig, wie auch an einen Fahrzeugrahmen, Hilfsrahmen oder -träger oder Chassis durch Kaltverbindung, wie Schrauben, Nieten, Kleben, Klemmen und Stecken oder durch Schweissen oder durch Kombinationen davon, miteinander verbunden werden. Die Verbindungen können durch Eckstücke, Knotenbleche, Steckelemente usw. ergänzt und verstärkt werden.

Der rückwärtige Rahmenteil (2) und frontwärtige Rahmenteile (4) können in Profilrichtung laufende Nuten, hinterschnittene Nuten, Anformungen, wie angeformte Fahnen, Stege oder Flansche aufweisen.

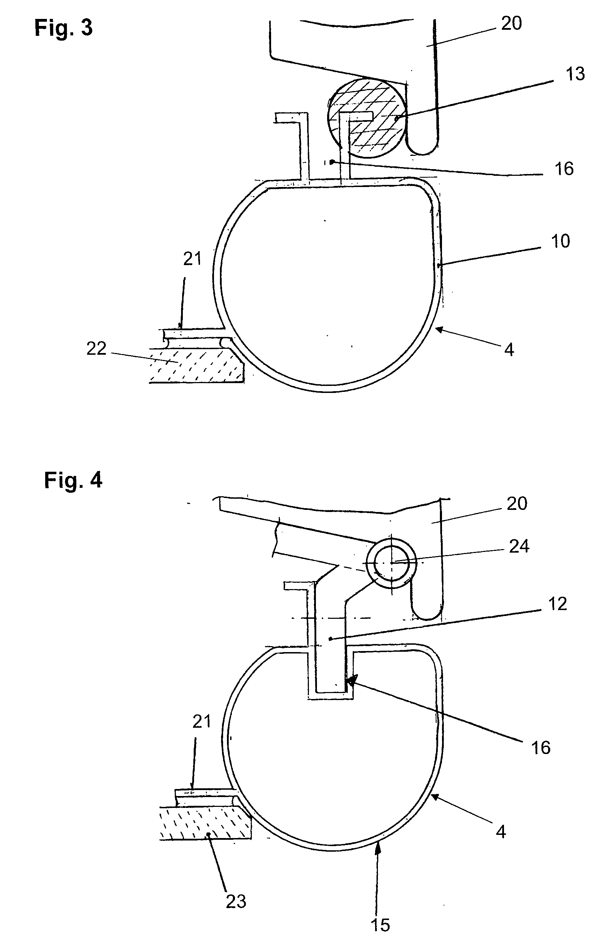

Die Figuren 3 bis 5 zeigen jeweils einen Schnitt durch verschiedene Ausführungsformen von frontwärtigen Rahmenteilen (4).

Gemäss Figur 3 ist der frontwärtige Rahmenteil (4) ein Einkammerhohlprofil (10) mit einer angeformten Nute (16) und einer in der Nute festgelegten Gummidichtung (13). Die Gummidichtung (13) dient zur Abdichtung des frontwärtigen Rahmenteils (4) gegen eine dort aufliegende Türe (20). Eine Anformung (21) trägt z.B. über eine Klebe- und Dichtmasse die Frontscheibe (22).

In Figur 4 ist eine weitere Ausführungsform des frontwärtigen Rahmenteils (4) gezeigt. Am frontwärtigen Rahmenteil (4), z.B. in einem senkrechten Bereich, ist über eine Nut (16) ein Türscharnier (24) mit einer Tür (20) festgelegt. Die Anformung (21) trägt eine Frontblende oder -blech (23) oder fallweise eine Frontscheibe.

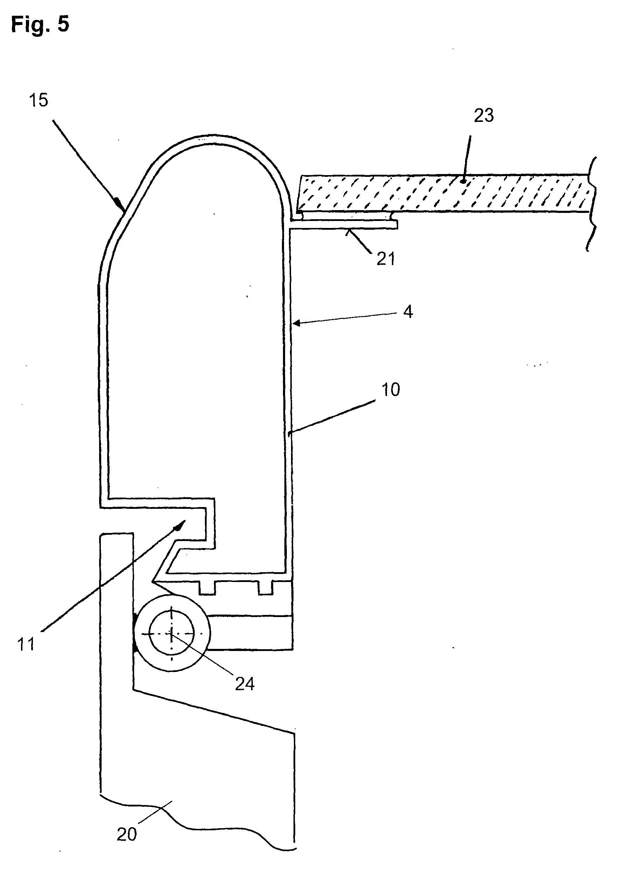

In Figur 5 ist eine weitere Ausführungsform des frontwärtigen Rahmenteils (4) gezeigt. Am frontwärtigen Rahmenteil (4), z.B. in einem senkrechten Bereich, ist über Türscharnier (24) eine Tür (20) befestigt. Das querschnittlich stabförmige Frontende der Türe greift bei vollständigem Öffnen der Türe in eine Hinterschneidung, Ausnehmung oder Nut (11) ein und begrenzt dadurch den Öffnungswinkel der Türe. Die Anformung (21) trägt eine Frontblende oder -blech (23) oder fallweise eine Frontscheibe.

Der U- oder ringförmige rückwärtige Rahmenbauteil (2) kann auch allfällige Überroll-Kräfte auffangen. Die Anbindung und Fixierung des Bauteiles erfolgt insbesondere im unteren Fahrzeugbereich. Der U- oder ringförmige Rahmenbauteil (2) wird zusätzlich durch ein, zwei oder mehrere frontwärtige Rahmenbauteile (4), die in der Fahrzeugfahrrichtung nach vorn gerichtet sind, ergänzt und fixiert. Die in Längsrichtung auf den rückwärtigen Rahmenbauteil (2) auftreffende Aufprallkräfte werden über den oder die frontwärtigen Rahmenbauteile (4) aufgenommen und in die Sicherheitskabine eingeleitet, resp. über den Fahrzeugrahmen, das Chassis etc. in das Gesamtfahrzeug eingeleitet.

Die frontwärtigen Rahmenbauteile (4) beinhalten eine Querschnittsfläche die ein optimales Crashverhalten bei einer Frontalkollision ermöglichen. Die frontwärtigen Rahmenbauteile (4) übernehmen eine Stützfunktion und Entlastung bei einem Verschieben des Ladegutes (z.B. beim Bremsen) auf das rückwärtige Rahmenbauteil (2) und dessen Anbindung im unteren Fahrzeugbereich.

In oder an den rückwärtigen Rahmenbauteil (2) kann eine zur Fahrzeuglängsachse kräfteübertragende Aussteifung im Bauteil montiert und/oder integriert sein.

Vorteilhaft sind die frontwärtigen Rahmenbauteile (4) im unteren Fahrzeugbereich mittels längsorientierten Verstrebungen mit dem rückwärtigen Rahmenbauteil (2) verbunden. Die frontwärtigen Rahmenbauteile (4) können als Hohl- oder Vollprofilquerschnitt vorgesehen werden. Die frontwärtigen Rahmenbauteile (4) können verschiedene Werkstoffe beinhalten. Die frontwärtigen Rahmenbauteile (4) können ganz, partiell oder nicht mit Schaum ausgefüllt werden. Die frontwärtigen Rahmenbauteile (4) können, bezogen auf ihren Profilquerschnitt z.B. Hinterschneidungen, Ausnehmungen aufweisen, welche eine Tür- oder Klappenöffnung von gegen 90° ermöglichen. An den frontwärtigen Rahmenbauteilen (4) können durchlaufende Konfigurationen in Form verschiedener Anformungen (21) vorhanden sind.

Die Höhe und Breite der Sicherheitskabine kann über die Ausläufe der frontwärtigen Rahmenbauteile (4) variieren. Zudem können die frontwärtigen Rahmenbauteile (4) Träger und/oder Anbauteil für andere Funktions- und Abdeckungsteile, z.B. Spritzwand, Armaturenträger, Dach, Fensterobergurt etc. sein. Die Anformungen (21) am frontwärtigen Rahmenbauteil (4) können entsprechend der zu übertragenden Kräfte, z.B. Türscharnier oder Funktionen, z.B. Türgummidichtungen, bestimmt werden.

Die Anformungen (21) können je nach Verbindungsmittel (Schweissen, Nieten, Kleben etc.) der Anbauteile variieren. Die Anformungen (21) können als örtliche Strukturverstärkungen aus verschiedenen Werkstoffen ausgeführt und fixiert werden.

Die frontwärtigen Rahmenbauteile (4) können eine Querschnittsabmessung von z.B. 50 bis 200 mm x 50 bis 250 mm aufweisen, vorzugsweise 70 mm x 120 mm.

An den frontwärtigen Rahmenbauteilen (4) kann mindestens eine Querschnittsanformung (21) vorhanden sein, welche das Aufnehmen und Fixieren der Frontscheibe oder einer Frontblende oder Stirnwand ermöglicht.

Die frontwärtigen Rahmenbauteile (4) können eine äussere Oberflächenpartie (15) mit einem sogenannten A-Klassfinish beinhalten.

Die frontwärtigen Rahmenbauteile (4) kann eine einfache Nute oder eine Nute mit Hinterschneidung, z.B. C-förmig ausgebildet, enthalten. Der Kraftverlauf vom rückwärtigen Rahmenbauteil (2) über die frontwärtigen Rahmenbauteile (4) wird geschlossen durch die längsorientierten Bodenträger, die Längsverstrebungen (9). Die Längsverstrebungen (9) und ein Verformungselement, Crashmodul oder Crashelement (1) sind so angeordnet, resp. geformt, dass ähnlich wie eine Schublade, das Verformungselement (1) von der Fahrzeugfrontseite eingeschoben werden kann und nach einem Unfall ausgewechselt werden kann. Das Crashelement kann div. Sensoren wie Abstandhalter (Distanz zum vorausfahrenden Fahrzeug, Parkierungshilfe etc.) beinhalten. Ferner können weitere Zubehörteile, wie Flüssigkeitstanks für Scheibenwasser, Motorkühlwasser, Klimaanlage etc. in diesem Crashelement (1) eingebaut werden. Bei einem Unfall besteht daher die Möglichkeit allfällige Brandherde am Entstehungsort erfolgreich zu bekämpfen, bzw. es kommt gar nicht zur Entfachung.

Eine allfällige Kippverriegelung, bzw. die Drehlager bei einem kippbaren und/oder beweglichen Fahrerhaus werden im Bereich der Anschlusskonfigurationen (18) plaziert.

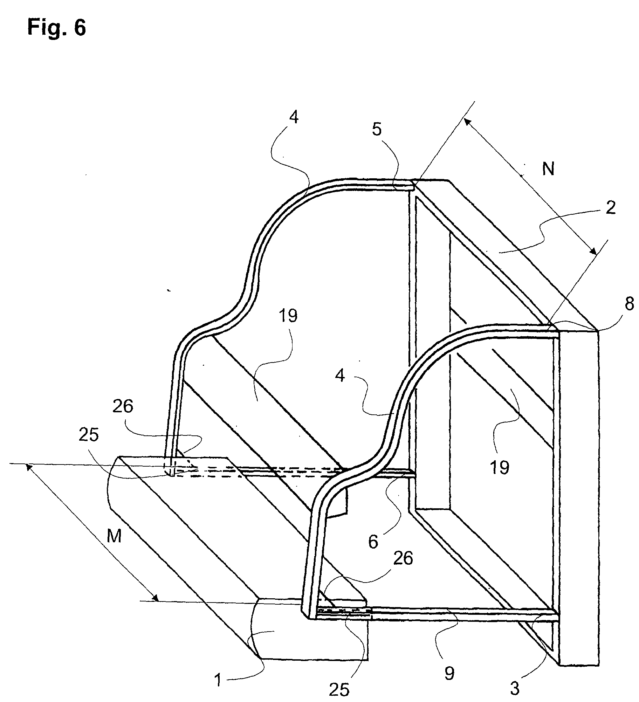

Die Figur 6 zeigt schematisch eine weitere Variante einer erfindungsgemässen Sicherheitskabine mit dem rückwärtigen Rahmenteil (2). Der rückwärtige Rahmenteil (2) ist in vorliegendem Beispiel ringförmig gestaltet. Die Seiten begrenzend, sind zwei frontwärtige Rahmenteile (4) angeordnet. Die frontwärtigen Rahmenteile (4) sind an den oberen Anschlussstellen (5), resp. (8), und an den unteren Anschlussstellen (3), resp. (6), über die Längsverstrebungen (9) mit dem rückwärtigen Rahmenteil (2) verbunden. Queraussteifungen (19) erhöhen die Stabilität der Sicherheitskabine. Die Queraussteifungen (19) zwischen den frontwärtigen Rahmenteilen (4) kann gleichzeitig Träger für Armaturen, Lenkstock, Airbags und Aggregate sein. Zwischen den frontwärtigen Rahmenteilen (4) ist ein Verformungselement (1) eingesetzt. Das Verformungselement (1) hat die Wirkung einer sog. Crash-Box. Bei einem Aufprall wird das Verformungselement (1) unter grosser Energieaufnahme gestaucht. Das Verformungselement (1) ist zwischen die frontwärtigen Rahmenteile (4) eingeschoben. Die Längsverstrebungen (9) weist seitlich gegen das Verformungselement gerichtet, beispielsweise eine C-förmige Anformung oder eine Nute usw. auf. Am Verformungselement (1) sind Halteorgane (25), wie Anformungen, Stifte, Führungen oder dergl. angeordnet, die in die C-förmigen Anformungen oder Nuten der Längsverstrebungen (9) eingreifen. Das Verformungselement (1) kann entlang den Längsverstrebungen (9) gleitend, insbesondere vor- und rückwärts, verschoben werden. Verriegelungen (26) halten bei normalem Gebrauch und während einer Kollision das Verformungselement (1) an seinem Platz. Zu einem Austausch, z.B. nach der Deformation durch eine Kollision, können die Verriegelungen (26) gelöst und das Verformungselement (1) nach vorne gleitend herausgenommen werden. Sinngemäss können in umgekehrter Bauweise die Halteorgane (25) auch in die Längsträger (9) integriert werden und schienenartige Führungen seitlich am Verformungselement (1) angebracht sein. Das Verformungselement (1) kann auch drehbar und verriegelbar oder drehbar, verriegelbar und aus- und einklinkbar sein. Der Drehpunkt und damit die Lagerung des Verformungselementes (1) liegt zweckmässig im Berührungsbereich des unteren Endes des bogenförmigen Abschnittes und der Längsverstrebung (9) der frontwärtigen Rahmenteile (4).

Der bogenförmige Teil der frontwärtigen Rahmenteile (4) sind in Figur 6 beispielhaft S-förmig ausgestaltet. Es handelt sich um z.B. einen zweiteiligen Rahmenteil, aus im wesentlichen dem S-förmigen oberen Teil und bodenseitig der im wesentlichen gerade und horizontal verlaufende Längsverstrebung (9). Die frontwärtigen Rahmenteile (4) sind am rückwärtigen Rahmenteil 2 in einer Distanz N voneinander festgelegt. An ihrem vorderen Ende sind die bogenfömigen frontwärtigen Rahmenteile (4) in einem Abstand M. Es kann der Abstand M gleich, kleiner oder grösser als der Abstand N sein. Dies bedeutet, dass bei einer Auslegung von M kleiner als N eine nach vorne zusammenlaufende Kabinenkongfiguration erzielt wird.

## Patentansprüche

1. Sicherheitskabine von Nutzfahrzeugen zum Lasten- und Personentransport, enthaltend Rahmenteile,
**dadurch gekennzeichnet, dass**
die Rahmenteile eine Käfigstruktur bilden, aus wenigstens einem rückwärtigen Rahmenteil (2), der quer zur Fahrtrichtung angeordnet ist und U- oder ringförmig ist, und wenigstens einem frontwärtigen Rahmenteil (4), der längs zur Fahrtrichtung angeordnet ist und bogen-, U- oder ringförmig ist, und der rückwärtige Rahmenteil (2) und der frontwärtige Rahmenteil (4) gegenseitig aneinander festgelegt sind.

2. Sicherheitskabine gemäss Anspruch 1, **dadurch gekennzeichnet, dass** die Käfigstruktur einen rückwärtigen Rahmenteil (2), der quer zur Fahrtrichtung angeordnet ist und U- oder ringförmig ist, und zwei frontwärtige Rahmenteile (4), die längs zur Fahrtrichtung angeordnet und bogen-, U- oder ringförmig sind, enthält und die frontwärtigen Rahmenteile (4) am rückwärtigen Rahmenteil (2) festgelegt sind.

3. Sicherheitskabine gemäss Anspruch 1, **dadurch gekennzeichnet, dass** innerhalb des bogen-, U- oder ringförmigen frontwärtigen oder zwischen zwei frontwärtigen Rahmenteilen (4) und/oder innerhalb des rückwärtigen Rahmenteils (2) wenigstens eine Queraussteifung (19) angeordnet ist.

4. Sicherheitskabine gemäss Anspruch 1, **dadurch gekennzeichnet, dass** der frontwärtige Rahmenteil (4) aus einem dachwärtigen Trägerteil und einer bodenwärtigen Längsverstrebung (9) besteht.

5. Sicherheitskabine gemäss Anspruch 1, **dadurch gekennzeichnet, dass** der rückwärtige Rahmenteil (2) quer zur Fahrtrichtung angeordnet ist und U- oder ringförmig ist und im Bodenbereich, vorzugsweise in den unteren Eckbereichen, wenigstens eine in Fahrtrichtung laufende Längsverstrebung (9) aufweist.

6. Sicherheitskabine gemäss Anspruch 1, **dadurch gekennzeichnet, dass** die frontwärtigen und rückwärtigen Rahmenteile (2,4) die äusseren Konturen der Sicherheitskabine bilden und die frontwärtigen und rückwärtigen Rahmenteile (2,4) an Eckpunkten der Sicherheitskabine aneinander festgelegt sind.

7. Sicherheitskabine gemäss Anspruch 1, **dadurch gekennzeichnet, dass** am vorderen Ende der Sicherheitskabine ein Verformungselement (1) angeordnet ist und zweckmässig das Verformungselement (1) sich auf den frontwärtigen Rahmenteil (4) oder die frontwärtigen Rahmenteile (4) abstützt.

8. Sicherheitskabine gemäss Anspruch 1, **dadurch gekennzeichnet, dass** die frontwärtigen Rahmenteile (4) gegenseitig, vorzugsweise über eine Queraussteifung (19), aneinander festgelegt sind, wobei im unteren Bereich des Rahmenteiles (4) ein bewegliches, als Gesamtmodul nach einem Unfall auswechselbares Verformungselement (1) positioniert ist.

9. Sicherheitskabine gemäss Anspruch 1, **dadurch gekennzeichnet, dass** sich der frontwärtige Rahmenteil (4) auf den Längsverstrebungen (9) abstützt.

10. Sicherheitskabine gemäss Anspruch 1, **dadurch gekennzeichnet, dass** das Verformungselement (1) auf der frontwärtigen Partie der Längsverstrebung (9) gleitet.

11. Sicherheitskabine gemäss Anspruch 1, **dadurch gekennzeichnet, dass** am vorderen Ende der Sicherheitskabine das Verformungselement (1) mit der unteren Partie des frontwärtigen Rahmenteiles (4), im Bereich der Verbindung mit der Längsverstrebung (9) mit einer Verriegelung (26) fixiert wird.

12. Sicherheitskabine gemäss Anspruch 1, **dadurch gekennzeichnet, dass** die frontwärtigen Rahmenteile (4) am vorderen Ende der Sicherheitskabine in einem Abstand M sind und im Bereich des Anschlusses an den rückwärtigen Rahmenteil (2) in einem Abstand N sind und die Abstände M und N gleich oder ungleich sind.

13. Sicherheitskabine gemäss Anspruch 12, **dadurch gekennzeichnet, dass** die frontwärtigen Rahmenteile (4) am vorderen Ende der Sicherheitskabine in einem Abstand M sind und im Bereich des Anschlusses an den rückwärtigen Rahmenteil (2) in einem Abstand N sind und der Abstand M kleiner ist, als der Abstand N.

14. Sicherheitskabine gemäss Anspruch 1, **dadurch gekennzeichnet, dass** am vorderen Ende das Verformungselement (1) mit einer drehbaren Lagerung und einer Verriegelung versehen ist, und die drehbare Lagerung sich im Berührungsbereich des unteren Endes des bogenförmigen Teils und der Längsverstrebung (9) an den frontwärtigen Rahmenteilen (4) abstützt und dass das Verformungsteil (1) entriegelbar und abschwenkbar ist.

15. Sicherheitskabine gemäss Anspruch 14, **dadurch gekennzeichnet, dass** das abgeschwenkte Verformungsteil (1) entfernbar und durch ein neues Verformungsteil ersetzbar ist.
